# EUROPÄISCHE PATENTSCHRIFT

(11) **EP 1 606 355 B1**
(45) Veröffentlichungstag und Bekanntmachung des Hinweises auf die Patenterteilung: **03.01.2018**
(21) Anmeldenummer: 04717050.1
(22) Anmeldetag: 04.03.2004
(51) Int. Cl.: C09C 1/24

(54) **EISENOXIDPIGMENTE**
IRON OXIDE PIGMENTS
PIGMENTS D'OXYDE DE FER

(30) Priorität: 17.03.2003 DE 10311550
(43) Veröffentlichungstag der Anmeldung: 21.12.2005
(73) Patentinhaber: LANXESS Deutschland GmbH, 50569 Köln (DE)
(72) Erfinder: MEISEN, Ulrich, 53925 Kall (DE); MLECZKO, Leslaw, 44801 Bochum (DE)
(86) Internationale Anmeldenummer: PCT/EP2004/002178
(87) Internationale Veröffentlichungsnummer: WO 2004/083318

(56) Entgegenhaltungen:
- EP-A- 0 850 881
- EP-A- 0 911 369
- G. BUXBAUM (ED.): "Industrial Inorganic Pigments" 1998, WILEY VCH , WEINHEIM , XP002289707 Seite 91, Absatz 3.1.1.4

## Beschreibung

Die Erfindung betrifft rote Eisenoxidpigmente mit einem mittleren Festkörperdurchmesser von 10 bis 500 µm sowie ihre Herstellung und Verwendung.

Verschiedene Verfahren existieren, um rote Eisenoxidpigmente herzustellen:

### a) Lauxverfahren

Das Lauxverfahren geht von Nitrobenzol und Fe-Metall aus und führt zuerst zu Eisenoxidschwarz oder Eisenoxidgelb und Anilin. Um nach diesem Verfahren Eisenoxidrot herzustellen, wird das erhaltene Eisenoxidschwarz verglüht. Das Verfahren ist sehr kompliziert und nicht leicht zu beherrschen, da zur Einstellung der gewünschten Teilchengröße variable Anteile an Steuerchemikalien eingesetzt werden müssen. Darüber hinaus ist die erforderliche Apparatetechnik anspruchsvoll und entsprechend teuer. Weiterhin entsteht bei der Reaktion als zweites Produkt Anilin, das aufgrund seiner Eigenschaften besondere arbeitshygienische Maßnahmen erforderlich macht.

Nachteilig für das durch das Lauxverfahren hergestellte Eisenoxidrot ist, dass das Eisenoxidrot eine Neigung zur Flockung im Lack sowie zur Agglomeration haben. Ferner staubt das durch das Lauxverfahren hergestellte Eisenoxidrot und weisen einen hohen DIN-pH-Wert auf (6).

### b) Fällungsverfahren

Die Herstellung von Eisenoxidrot nach einem direkten Fällungsverfahren ist in US-5 421 878 beschrieben. Das direkte Fällungsverfahren ist verfahrenstechnisch schwierig, da α-Fe₂O₃ nur in einem schmalen Bereich zugänglich ist und die Reaktion nicht leicht zu beherrschen ist. Das durch das Fällungsverfahren hergestellte Eisenoxidrot hat den Nachteil, hoher Salzfrachten, die das Abwasser belasten und dadurch ökologisch bedenklich sind.

Die durch das Fällungsverfahren hergestellten Eisenoxidrote haben, außer hoher Herstellkosten, ferner den Nachteil, dass sie stauben und einen hohen DIN-pH-Wert aufweisen (4,5 bis 6).

### c) Hydrothermalverfahren

Das Hydrothermalverfahren ist in DE-A-19917786 beschrieben. Nach dem Hydrothermalverfahren lassen sich gute Eisenoxidrotpigmente für höherwertige Anwendungen, besonders für Farbe und Lacke, herstellen. Nachteilig wirken sich hier jedoch die hohen Verfahrenskosten, bedingt durch die Drucktechnik, aus. Für einfachere Anwendungen bei denen preiswerte Produkte erforderlich sind, ist dieses Verfahren deshalb nicht geeignet.

Die durch das Hydrothermalverfahren hergestellten Eisenoxidrotpigmente haben, außer hohen Herstellkosten, ferner den Nachteil, dass sie stauben.

### d) Penniman-Zoph Verfahren

Das Hydrothermalverfahren ist in DE-A-19958168 beschrieben. Gemäß des Penniman-Zoph Verfahrens werden Eisenoxidrotpigmente dadurch hergestellt, das Eisenmetall unter Zusatz eines Eisenoxidrotkeims gelöst und oxidiert wird. Hierbei wird zur Keimherstellung in der Regel Salpetersäure eingesetzt, so dass sich im Abwasser Nitrat oder Ammonika befindet, das unter hohem verfahrenstechnischen Aufwand entfernt werden muss. Dies führt wie beim Hydrothermalverfahren und beim Fällverfahren zu hohen Herstellkosten, die die Anwendung derartiger Pigmente auf einige wenige Gebiete beschränken.

Die durch das Hydrothermalverfahren hergestellten Eisenoxidrote haben, außer ein kostenintensives und umweltbelastendes Herstellverfahren, ferner den Nachteil, dass sie stauben und einen hohen DIN-pH-Wert aufweisen (4,5 bis 6).

### e) Verglühen von eisenhaltigen Materialien

Das Verglühen von eisenhaltigen Materialien ist in EP-A-0 911 369 beschrieben. Durch Verglühen von Eisenoxidgelb, Eisenoxidschwarz oder andere eisenhaltige oxidische oder metallische Feststoffe läßt sich Eisenoxidrot herstellen. Bedingt durch die erforderlichen hohen Temperaturen leidet die Qualität der daraus hergestellten Eisenoxidrotpigmente. Um qualitativ hochwertige Eisenoxidrotpigmente herzustellen sind also qualitativ hochwertige Vorläuferverbindungen erforderlich, die das Verfahren verteuern.

Die durch Verglühen von eisenhaltigen Materialien hergestellten Eisenoxidrotpigmente haben ferner den Nachteil, dass sie relativ hart sind und aufwändig gemahlen werden müssen. Ferner stauben die durch Verglühen von eisenhaltigen Materialien hergestellte Eisenoxidrote.

### f) Zersetzung von FeSO₄

Die Zersetzung von Eisen-II-sulfat bei hohen Temperaturen führt zu Eisenoxidrot und SO₂, das zu Schwefelsäure umgesetzt werden kann. Dieses Verfahren erfordert aufgrund der hohen notwendigen Temperaturen und der Korrosivität der entstehenden Gase hohe apparatetechnische Aufwendungen.

Die durch die Zersetzung von FeSO₄ hergestellten Eisenoxidrote haben, außer oben beschriebene Nachteile des Herstellverfahrens, ferner den Nachteil, dass sie stauben. Für viele Anwendungen im Bereich der Einfärbung von Betonteilen, Dispersionsfarben und Papiereinfärbungen werden inzwischen Granalien eingesetzt, da diese staubarm, gut fließfähig und gut dispergierbar sind. Bei den gängigen Granulationsverfahren wird von Pulvern ausgegangen, die mit einem Bindemittel versetzt werden und anschließend granuliert werden. Gängige Granulationsverfahren sind Sprühgranulation, Pressgranulation und Tellergranulation.

### g) Pyrohydrolyse von FeCl₂ oder Fe(NO₃)₂

Die Pyrohydrolyse wurde seit ca. 1960 zur industriellen Reife entwickelt und diente zunächst hauptsächlich zur Wiedergewinnung von HCl aus Beizlösungen (FeCl₂). Mittlerweile ist es zu einem bedeutenden Verfahren zur Gewinnung von Oxidrohstoffen, besonders von Eisenoxiden geworden. Vorteile dieses Verfahrens sind, dass es kontinuierlich zu betreiben ist, flüssige Rohstoffe verwendet, wirtschaftlich ist, und keine Nebenprodukte und Prozesschemikalien verwendet und deshalb besonders umweltfreundlich ist.

Dieses Verfahren wird breit in der metallurgischen Industrie eingesetzt. Hauptprodukt ist hierbei die wiedergewonnene Salzsäure (in manchen Fällen auch Flusssäure oder Salpetersäure), die wieder zum Beizen von Stahl eingesetzt wird. Als Nebenprodukt entsteht Eisenoxid, das zunächst wieder dem Hochofen zugeführt wurde. Durch spezielle Reinigungsschritte der Beize (FeCl₂-Lösung) gelingt es, reine Eisenoxide für die Ferritindustrie herzustellen. Bei dieser Anwendung ist eine genau definierte und möglichst konstante chemische Zusammensetzung und ein geringer Grad an Verunreinigungen erforderlich. Benötigt werden relativ hart gesinterte Oxide mit einem möglichst geringen Chloridgehalt. Die spezifische Oberfläche (nach der BET-Methode bestimmt) beträgt in Abhängigkeit von der Reaktionstemperatur der Zersetzung üblicherweise 3-5 m²/g. In Einzelfällen können auch BET-Oberflächen von 10m²/g erreicht werden. Das Verfahren ist ausführlich in Artikeln und Patenten beschrieben (Kladnig, W. & Karner, W.; cfi/Ber DKG 67 (1990), 80; EP-A-0850881).

Aufgrund der geringen spezifischen Oberfläche derartiger Produkte sind diese für hochwertige Pigmentanwendungen nicht geeignet, da sie einen unerwünschten Blaustich aufweisen. Übliche nach dem Pyrohydrolyseverfahren hergestellte kommerziell erhältliche Eisenoxidrotpigmente weisen BET-Oberflächen zwischen 2 und 5,5 m²/g auf (Firmenschrift Bailey-PVS Oxides L.L.C.; Firmenschrift ThyssenKrupp Stahl 05/2000). Auch diese Produkte sind aufgrund ihrer geringen spezifischen Oberfläche blaustichig und somit für hochwertige Pigmentanwendungen nicht geeignet.

In der EP911369 werden Eisenoxidrotpigmente mit bestimmten Farborten L*, a* und b* beschrieben, die jedoch in den Beispielen einen mittleren Festkörperdurchmesser unterhalb von 10 µm aufweisen.

In G. Buxbaum: "Industrial Inorganic Pigments", 1998, Wiley VCH Weinheim, XP002289707 wird offenbart, dass die optischen Eigenschaften von EisenoxidPigmenten von der Partikelgröße abhängen.

Gemäß der EP850881 wird ein Verfahren zur Herstellung von Eisenoxiden mit geringen Restchloridgehalten aus salzsauren Eisenchlorid-haltigen Lösungen in einem Sprühröster offenbart, wobei die Entwässerung und Kalzinierung jedoch in einem Schritt statt in zwei Schritten erfolgt.

Der Erfindung lag die Aufgabe zugrunde, ein staubarmes, frei fließendes rotes Eisenoxidpigment herzustellen, das selbst ohne Bindemittel gute Farbeigenschaften, d.h. keine Blaustiche aufweist.

Die Erfindung betrifft Eisenoxidpigmente mit L*- a*- und b*-Werten gemessen in Aufhellung nach CIELAB-Einheiten von
L* = 58 bis 62, insbesondere von 59 bis 60,5,
a* = 22 bis 27, insbesondere von 23 bis 26,
b* = 10 bis 24, insbesondere von 10 bis 15 und
mit einem Eisenoxidanteil von größer als 99 Gew.-%, bezogen auf das Pigment, und einem mittleren Festkörperdurchmesser von 10 bis 500 µm.

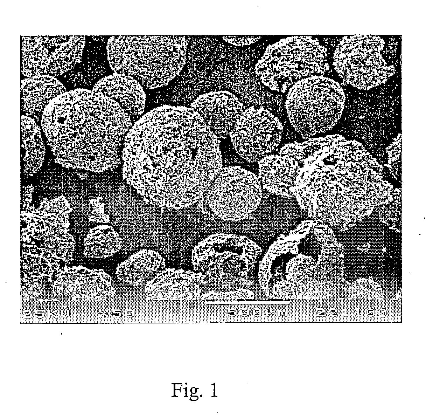

Unter "Festkörper" werden im Rahmen dieser Anmeldung Kugeln oder Hohlkugeln verstanden, wobei die Hohlkugeln ein oder mehrere Löcher beinhalten können. Die Mehrheit der Festkörper, d.h. mehr als 50 %, besteht aus Hohlkugeln. Eine Ablichtung der erfindungsgemäßen Festkörper ist in Fig. 1 dargestellt.

Die Festkörper der Eisenoxidpigmente weisen vorzugsweise eine BET-Oberfläche von 6,0 bis 12,0 m²/g auf.

Die Festkörper der Eisenoxidpigmente bestehen aus Primärteilchen, die vorzugsweise eine mittlere Größe von 0,05 bis 0,5, bevorzugt von 0,1 bis 0,3 µm, besitzen. Die Primärteilchen sind ebenfalls Bestandteil der Erfindung.

Der Eisenoxidpigment besitzt vorzugsweise ein DIN-pH Wert von 2,5 bis 4,0, bevorzugt von 2,8 bis 3,5.

Es ist ebenfalls bevorzugt, dass der Chloridanteil 0,1 Gew.-% oder weniger, bezogen auf das Pigment, beträgt.

Es ist ebenfalls bevorzugt, dass das Eisenoxidpigment aus Primärteilchen besteht, die eine mittlere Größe von 0,05 bis 0,5, bevorzugt von 0,1 bis 0,3 µm, haben.

Die Erfindung betrifft weiterhin ein Verfahren zur Herstellung der erfindungsgemäßen Eisenoxidpigmente, dadurch gekennzeichnet, dass Tropfen einer wässrigen Eisenchloridlösung in eimen ersten Schritt entwässert werden, um Festkörper zu bilden, die anschließend in einem zweiten Schritt calciniert werden.

Unter "calcinieren" wird im Rahmen dieser Anmeldung die thermische Zersetzung der Eisenchloridlösung nach einer der folgender Reaktionsgleichung verstanden:

2FeCl₂ + 2H₂O + 1/2O₂ → Fe₂O₃ + 4HCl

2FeCl₃ + 3H₂O → Fe₂O₃ + 6HCl

Das erfindungsgemäße Verfahren wird vorzugsweise so durchgeführt, dass die Eisenchloridlösung, in dem Eisenchlorid der Eisenchloridlösung FeCl₂ und/oder FeCl₃ vorliegt, in einem Reaktor durch eine 1-Stoff oder 2-Stoffdüse verdüst wird, so dass Tropfen mit einem mittleren Durchmesser von 50 bis 1000 µm entstehen.

Die Entwässerung findet vorzugsweise bei einer Temperatur von 300 bis 900°C, bevorzugt von 400 bis 700°C, statt. Die Entwässerung kann z.B. in einem Reaktor durch Verbrennungsgase, elektrische Beheizung, Mikrowellenheizung oder elektromagnetische Wellen erzeugt werden. Die Verbrennungsgase können dabei im Gleich-oder Gegenstrom geführt werden. Das Gas wird vorzugsweise innerhalb oder ausserhalb des Reaktors vom Eisenoxidpigment getrennt und zu Salzsäure-Lösung aufgearbeitet.

Die Calcinierung wird bei Temperaturen von 200 bis 800°C durchgeführt.

Die Calcinierung kann durch eine thermische Behandlung stattfinden, indem Wasserdampf bei Temperaturen von 200 bis 400°C mit dem Festkörper in Kontakt gebracht wird. Die thermische Behandlung kann im selben oder in einem separaten Reaktor stattfinden.

Im Anschluss an die Calcinierung kann eine weitere thermische Behandlung bei Temperaturen von 200 bis 800°C durchgeführt werden. Bei dieser thermischen Behandlung wachsen die Primärteilchen, wodurch sich die farblichen Eigenschaften verbessern. Diese thermische Behandlung kann im selben oder in einem separaten Reaktor stattfinden.

Die gesamte Verweilzeit der Tropfen/Festkörper bei Temperaturen von mehr als 300 °C während der Entwässerung und Calcinierung liegt vorzugsweise zwischen 1 Sekunde und 90 Minuten, bevorzugt zwischen 5 Minuten und 70 Minuten.

Zusätzlich können nach der Entwässerung, entweder vor oder nach der Calcinierung, die Festkörper abgekühlt werden und anschließend mit Wasser gewaschen werden.

Alle Herstellungsschritte können entweder im selben Reaktor oder in verschiedenen Reaktoren durchgeführt werden.

Bevorzugt werden folgende Reaktionsparameter eingestellt: Eindüsen von einer wässrigen FeCl₂-Lösung mit einem Gehalt von 100 bis 400 g/l FeCl₂ mit einer 2-Stoffdüse in den Reaktor, so dass Tropfen mit einem mittleren Durchmesser von 50 bis 200 µm entstehen. Einstellen der Reaktionstemperatur auf 300 bis 600°C in den Reaktor. Anschließende Entwässerung im gleichen Reaktor bei Temperaturen von 600 bis 800°C. Entfernen von Chlorid duch Durchleiten von Dampf durch eine Schüttung des Produkts bei 200 bis 400°C. Anschließende thermische Behandlung bei Temperaturen von 600 bis 800°C.

Durch das Herstellverfahren werden gelbrote Eisenoxidpigmente erhalten, die für ein breites Einsatzspektrum geeignet sind. Diese Eisenoxidpigmente können ferner bindemittelfrei im Sinne der Erfindung hergestellt werden. Nach den erfindungsgemäßen Verfahren werden Festkörper erhalten. Die Festkörper werden mehrheitlich als Hohlkugeln erhalten.

Für einige Anwendungen, besonders im Farb und Lackbereich, sind feingemahlene Pulver erforderlich. Die Festkörper können deshalb anschließend nach der Calcinierung gemahlen werden, bis eine mittlere Größe von 0,05 bis 0,5, bevorzugt von 0,1 bis 0,3 µm, erreicht wird. Als Mahlapparat wird bevorzugt eine Strahlmühle, eine Pendelmühle oder eine mechanische Sichtermühle benutzt.

Die Erfindung betrifft weiterhin die Verwendung der erfindungsgemäßen Eisenoxidpigmente im Baubereich, für Farben und Lacke, als Rohstoff zur Herstellung von Hart- und Weichferriten, zur Herstellung von Katalysatoren, zur Einfärbung von Papier und zur Anwendung bei eingefärbten Stoffen im Lebensmittel und/oder im Kosmetikbereich.

Im Rahmen der vorliegenden Erfindung versteht man unter Anwendungen im Baubereich Anwendungen in Putze, Pflastersteine, Mörtelmischungen etc. Das im Reaktor entstandene Eisenoxidpigment kann ferner nach Abkühlung unmittelbar abgefüllt und Anwendung finden.

Die erfindungsgemäßen Eisenoxidpigmenten können als Festkörper direkt im Baubereich und/oder zur Herstellung von Katalysatoren verwendet werden.

Für einige Anwendungen sind feingemahlene Pulver erforderlich Die erfindungsgemäßen Eisenoxidpigmente können deshalb als Primärteilchen im Baubereich, für Farben und Lacke, als Rohstoff zur Herstellung von Hart- und Weichferriten, zur Herstellung von Katalysatoren, zur Einfärbung von Papier und zur Anwendung bei eingefärbten Stoffen im Lebensmittel und/oder im Kosmetikbereich verwendet werden.

Die Erfindung soll durch folgenden Beispiele erläutert werden:

### Beispiele

### Versuchsanordnung

Die Messung der Aufhellung (Farbstärke) der erhaltenen Teilchen erfolgt wie in EP-A-911369, Seite 6 Zeile 9 bis Seite 7, Zeile 26, angegben.

Die Teilchengröße wurde aus transmissionselektronischen Aufnahmen (Primärteilchen) oder rasterelektronenmikroskopischen Aufnahmen (Festkörper u.a.. als Hohlkugeln) ermittelt.

Die Bestimmung der metallischen Nebenbestandteile erfolgte durch ICP-OES. ICP-OES ist ein Verfahren zur Bestimmung von Elementen, die in geringer Konzentration in einer wässrigen Probe vorliegen. Es handelt sich hierbei um ein spektroskospisches Verfahren, bei dem das zu bestimmende Element angeregt wird und das emittierte Licht des Übergangs in den Grundzustand, das für jedes Element charakteristisch ist, gemessen wird (OES = optical emmission). Die Anregung geschieht durch einen Plasmabrenner (ICP = inductive cuppled plasma). Die Nachweisgrenze der Bestimmungsmethode beträgt 5 µg/kg.

Die Bestimmung des Chloridgehalts wurde argentometrisch mit potentiometrischer Endpunktsbestimmung bestimmt Die Nachweisgrenze der Bestimmungsmethode beträgt 50 mg/kg.

Die Messung des pH-Werts des Pulvers erfolgt in einer Aufschlämmung in vollentsalztem Wasser nach DIN-EN-ISO 787-9.

### Beispiel 1

In einem Sprühröstreaktor wurde eine wässrige Eisen-II-chlorid Lösung mit einer Konzentration von 340 g/l FeCl₂ und einem HCl-Gehalt von 10 g/l bei einer Temperatur von 600°C in den Reaktor versprüht. Der Durchsatz betrug 14 l Lösung pro Stunde. Das im Zyklon abgeschiedene Material wurde in den Aufgabestrom zurückgeführt. Die Verweilzeit im Reaktor betrug 10 Sekunden. Es entstanden Festkörper u.a. in Form von Hohlkugeln mit einem mittleren Festkörperdurchmesser von 80 bis 400 µm.

Das abgeschiedene Material wurde nach Abkühlung mit Wasser so lange gewaschen, bis ein Chloridgehalt von weniger als 0,1 Gew % erreicht wurde.

Nach der Wäsche wurde das Material in einem Laborkammerofen bei 800°C 60 Minuten lang calciniert. Die gesamte Verweilzeit bei Temperaturen von mehr als 300°C betrug also 60 Min 10 Sec.

Das Endprodukt hatte folgende Eigenschaften:
- Mittlerer Durchmesser der Festkörper: 200 µm
- Mittlerer Durchmesser der Primärpartikel: 0,2 µm
- L*: 58,4 (Aufhellung)
- a*: 24,4 (Aufhellung)
- b*: 13,4 (Aufhellung)
- Cl-Gehalt: 0,1 Gew%
- BET-Oberfläche: 6,1 m²/g
- DIN-pH: 2,9

### Beispiel 2

In einem Sprühröstreaktor wurde eine wässrige Eisen-II-chlorid Lösung mit einer Konzentration von 340 g/l FeCl₂ und einem HCl-Gehalt von 10 g/l bei einer Temperatur von 560°C in den Reaktor versprüht. Der Durchsatz betrug 14 l Lösung pro Stunde. Das im Zyklon abgeschiedene Material wurde in den Aufgabestrom zurückgeführt. Die Verweilzeit im Reaktor betrug 10 Sekunden. Es entstanden Festkörper u.a. in Form von Hohlkugeln mit einem mittleren Festkörperdurchmesser von 100 bis 500 µm

Das abgeschiedene Material wurde nach Abkühlung mit Wasser so lange gewaschen, bis ein Chloridgehalt von weniger als 0,1 Gew.-% erreicht wurde.

Nach der Wäsche wurde das Material in einem Laborkammerofen bei 750°C 60 Minuten lang calciniert. Die Abhühlgeschwindigkeit betrug 130°C pro Minute. Die gesamte Verweilzeit bei Temperaturen von mehr als 300°C betrug also 60 Min 10 Sec.

Das Endprodukt hatte folgende Eigenschaften:
- Mittlerer Durchmesser der Festkörper: 300 µm
- Mittlerer Durchmesser der Primärpartikel: 0,2 µm
- L*: 58,9 (Aufhellung)
- a*: 24,3 (Aufhellung)
- b*: 13,2 (Aufhellung)
- Cl-Gehalt: 0,07 Gew%
- BET-Oberfläche: 9,6 m²/g
- DIN-pH: 3,4

### Beispiel 3

In einem Sprühröstreaktor wurde eine wässrige Eisen-II-chlorid Lösung mit einer Konzentration von 340 g/l FeCl₂ und einem HCl-Gehalt von 10 g/l bei einer Temperatur von 560°C in den Reaktor versprüht. Der Durchsatz betrug 14 l Lösung pro Stunde. Das im Zyklon abgeschiedene Material wurde in den Aufgabestrom zurückgeführt. Die Verweilzeit im Reaktor betrug 10 Sekunden. Es entstanden Festkörper u.a. in Form von Hohlkugeln mit einem mittleren Festkörperdurchmesser von 100 bis 500 µm.

Das abgeschiedene Material wurde nach Abkühlung mit Wasser so lange gewaschen, bis ein Chloridgehalt von weniger als 0,1 Gew.-% erreicht wurde.

Nach der Wäsche wurde das Material in einem Laborkammerofen bei 800°C 60 Minuten lang calciniert. Die Abkühlgeschwindigkeit betrug 150°C pro Minute. Die gesamte Verweilzeit bei Temperaturen von mehr als 300°C betrug also 60 Min 10 Sec.

Das Endprodukt hatte folgende Eigenschaften:
- Mittlerer Durchmesser der Festkörper: 300 µm
- Mittlerer Durchmesser der Primärpartikel: 0,2 µm
- L*: 58,9 (Aufhellung)
- a*: 23,8 (Aufhellung)
- b*: 11,9 (Aufhellung)
- Cl-Gehalt: 0,06 Gew%
- BET-Oberfläche: 7,2 m²/g
- DIN-pH: 3,2

### Vergleichbeispiel zu Beispiel 2 und 3

Das Material aus den Beispielen 2 und 3 wurde nach der Waschung ohne nachträgliche Calcinierung im Laborkammerofen untersucht und wies folgende Eigenschaften auf:
- Mittlerer Durchmesser der Festkörper: 300 µm
- Mittlerer Durchmesser der Primärpartikel: 0,2 µm
- L*: 60,8 (Aufhellung)
- a*: 23,5 (Aufhellung)
- b*: 23,1 (Aufhellung)
- Cl-Gehalt: 0,09 Gew%
- BET-Oberfläche: 20 m²/g

### Vergleichsbeispiel 2

In einem Sprühröstreaktor wurde eine wässrige Eisen-II-chlorid Lösung mit einer Konzentration von 340 g/l FeCl₂ und einem HCl-Gehalt von 10 g/l bei einer Temperatur von 660°C in den Reaktor versprüht. Der Durchsatz betrug 14 l Lösung pro Stunde. Das im Zyklon abgeschiedene Material wurde in den Aufgabestrom zurückgeführt. Die Verweilzeit im Reaktor betrug 10 Sekunden. Es entstanden Festkörper u.a. in Form von Hohlkugeln mit einem mittleren Festkörperdurchmesser 100 bis 500 µm

Das abgeschiedene Material wurde nach Abkühlung mit Wasser so lange gewaschen, bis ein Chloridgehalt von weniger als 0,1 Gew.-% erreicht wurde.

Das Endprodukt hatte folgende Eigenschaften:
- Mittlerer Durchmesser der Festkörper: 250 µm]
- Mittlerer Durchmesser der Primärpartikel: 0,2 µm
- L*: 59,0 (Aufhellung)
- a*: 20,9 (Aufhellung)
- b*: 10,9 (Aufhellung)
- Cl-Gehalt: 0,09 Gew%
- BET-Oberfläche: 7,2 m²/g

### Übersicht der Beispiele

| | **Beispiele** | | | **Vergleichsbeispiele** | |
|---|---|---|---|---|---|
| | **1** | **2** | **3** | **2+3** | **2** |
| Entwässerung in °C | 600 | 560 | 560 | 560 | 660 |
| Zeit der Entwässerung in Sek | 10 | 10 | 10 | 10 | 10 |
| Kalzination in °C | 800 | 750 | 800 | - | - |
| Zeit der Kalzination in Min | 60 | 60 | 60 | - | - |
| Gesamte Verweilszeit | 60:10 | 60:10 | 60:10 | :10 | :10 |
| Mittler Durchmesser der Festkörper in µm | 200 | 300 | 300 | 300 | 250 |
| Mittler Durchmesser der Primärpartikel in µm | 0,2 | 0,2 | 0,2 | 0,2 | 0,2 |
| L* | 58,4 | 58,9 | 58,9 | 60,8 | 59,0 |
| a* | 24,4 | 24,3 | 23,8 | 23,5 | 20,9 |
| b* | 13,4 | 13,2 | 11,9 | 23,1 | 10,9 |
| Cl-Gehalt (Gew.-%) | 0,1 | 0,07 | 0,06 | 0,09 | 0,09 |
| BET (m²/g) | 6,1 | 9,6 | 7,2 | 20 | 7,2 |
| DIN-pH | 2,9 | 3,4 | 3,2 | - | - |

## Patentansprüche

1. Eisenoxidpigment mit L*- a*- und b*-Werten gemessen in Aufhellung nach CIELAB-Einheiten von
L* = 58 bis 62, insbesondere von 59 bis 60,5,
a* = 22 bis 27, insbesondere von 23 bis 26,
b* = 10 bis 24, insbesondere von 10 bis 15 und
mit einem Eisenoxidanteil von größer als 99 Gew.-%, bezogen auf das Pigment, und einem mittleren Festkörperdurchmesser von 10 bis 500 µm.

2. Eisenoxidpigment gemäß Anspruch 1, **dadurch gekennzeichnet, dass** die Festkörper eine BET-Oberfläche von 6,0 bis 12,0 m²/g haben.

3. Eisenoxidpigment gemäß Anspruch 1, **dadurch gekennzeichnet, dass** die Primärteilchen der Festkörper eine mittlere Größe von 0,05 bis 0,5, insbesondere von 0,1 bis 0,3 µm, besitzen.

4. Eisenoxidpigment gemäß Anspruch 1, **dadurch gekennzeichnet, dass** das Eisenoxidpigment ein DIN-pH Wert von 2,5 bis 4,0, insbesondre von 2,8 bis 3,5, hat.

5. Eisenoxidpigment gemäß einem der Ansprüche 1 bis 4, **dadurch gekennzeichnet, dass** das Eisenoxidpigment einen Chloridgehalt von 0,1 Gew.-% oder weniger, bezogen auf das Pigment, hat.

6. Eisenoxidpigment gemäß einem der Ansprüche 1 bis 5, **dadurch gekennzeichnet, dass** das Eisenoxidpigment aus Primärteilchen besteht, die eine mittlere Größe von 0,05 bis 0,5, insbesondere von 0,1 bis 0,3 µm, haben.

7. Verfahren zur Herstellung von Eisenoxidpigment nach einem der Ansprüche 1 bis 6, **dadurch gekennzeichnet, dass** Tropfen einer Eisenchloridlösung in einem ersten Schritt entwässert werden, um Festkörper zu bilden, die anschließend in einem zweiten Schritt calciniert werden um ihren Chloridgehalt zu reduzieren.

8. Verfahren zur Herstellung von Eisenoxidpigment gemäß Anspruch7, **dadurch gekennzeichnet, dass** das Eisenchlorid der Eisenchloridlösung FeCl₂ oder FeCl₃ ist.

9. Verfahren zur Herstellung von Eisenoxidpigment gemäß Anspruch 7, **dadurch gekennzeichnet, dass** die Tropfen einen mittleren Durchmesser von 50 bis 1000 µm haben.

10. Verfahren zur Herstellung von Eisenoxidpigment gemäß Anspruch 7, **dadurch gekennzeichnet, dass** die Entwässerung bei einer Temperatur von 300 bis 900°C, insbesondere von 400 bis 700°C, stattfindet.

11. Verfahren zur Herstellung von Eisenoxidpigment gemäß Anspruch 7, **dadurch gekennzeichnet, dass** die Calcinierung bei Temperaturen von 200 bis 800 °C durchgeführt wird.

12. Verfahren zur Herstellung von Eisenoxidpigment gemäß Anspruch 7, **dadurch gekennzeichnet, dass** die Entchlorierung durch eine thermische Behandlung stattfindet, indem Dampf bei Temperaturen von 200 bis 400°C mit dem Festkörper in Kontakt gebracht wird.

13. Verfahren zur Herstellung von Eisenoxidpigmenten gemäß Anspruch 7, **dadurch gekennzeichnet, dass** eine zweite thermische Behandlung bei Temperaturen von 200 bis 800°C durchgeführt wird.

14. Verfahren zur Herstellung von Eisenoxidpigment gemäß Anspruch 7, **dadurch gekennzeichnet, dass** die gesamte Verweilzeit der Tropfen/Festkörper bei Temperaturen von mehr als 300°C während der Entwässerung und Calcinierung zwischen 1 s und 90 min, insbesondere zwischen 5 min und 70 min, liegt.

15. Verfahren zur Herstellung von Eisenoxidpigment gemäß Anspruch 7, **dadurch gekennzeichnet, dass** zusätzlich nach der Entwässerung entweder vor oder nach der Calcinierung die Festkörper abgekühlt werden und anschließend mit Wasser gewaschen werden.

16. Verfahren zur Herstellung von Eisenoxidpigment gemäß Anspruch 7, **dadurch gekennzeichnet, dass** alle Herstellungsschritte im gleichen Reaktor oder in verschiedenen Reaktoren durchgeführt werden.

17. Verfahren zur Herstellung von Eisenoxidpigment gemäß einem der Ansprüche 7 bis 15, **dadurch gekennzeichnet, dass** die Festkörper nach der Calcinierung anschließend gemahlen werden, insbesondere mit einer Strahlmühle, einer Pendelmühle oder mit einer mechanischen Sichtermühle, bis eine mittlere Größe von 0,05 bis 0,5, insbesondere von 0,1 bis 0,3 µm, erreicht wird.

18. Verwendung von Eisenoxidpigmenten nach einem der Ansprüche 1 bis 6 im Baubereich, für Farben und Lacke, als Rohstoff zur Herstellung von Hart- und Weichferriten, zur Herstellung von Katalysatoren, zur Einfärbung von Papier und zur Anwendung bei eingefärbten Stoffen im Lebensmittel und/oder im Kosmetikbereich.

19. Verwendung von Eisenoxidpigmenten nach einem der Ansprüche 1 bis 5 im Baubereich und/oder zur Herstellung von Katalysatoren.

20. Verwendung von Eisenoxidpigmenten nach Anspruche 6 im Baubereich, für Farben und Lacke, als Rohstoff zur Herstellung von Hart- und Weichferriten, zur Herstellung von Katalysatoren, zur Einfärbung von Papier und zur Anwendung bei eingefärbten Stoffen im Lebensmittel und/oder im Kosmetikbereich.

## Claims

1. Iron oxide pigment having L*, a* and b* values, measured in the lightened tone according to CIELAB units, of
L* = 58 to 62, in particular 59 to 60.5,
a* = 22 to 27, in particular 23 to 26,
b* = 10 to 24, in particular 10 to 15, and
having an iron oxide content greater than 99% by weight, based on the pigment, and a mean solids diameter of 10 to 500 µm.

2. Iron oxide pigment according to Claim 1, **characterized in that** the solids have a BET surface area of 6.0 to 12.0 m²/g.

3. Iron oxide pigment according to Claim 1, **characterized in that** the primary particles of the solids have a mean size of 0.05 to 0.5, in particular of 0.1 to 0.3, µm

4. Iron oxide pigment according to Claim 1, **characterized in that** the iron oxide pigment has a DIN pH of 2.5 to 4.0, in particular 2.8 to 3.5.

5. Iron oxide pigment according to any of Claims 1 to 4, **characterized in that** the iron oxide pigment has a chloride content of 0.1% by weight or less, based on the pigment.

6. Iron oxide pigment according to any of Claims 1 to 5, **characterized in that** the iron oxide pigment consists of primary particles which have a mean size of 0.05 to 0.5, in particular 0.1 to 0.3, µm.

7. Process for the preparation of iron oxide pigment according to any of Claims 1 to 6, **characterized in that** drops of an iron chloride solution are dewatered in a first step in order to form solids, which are subsequently calcined in a second step in order to reduce their chloride content.

8. Process for the preparation of iron oxide pigment according to Claim 7, **characterized in that** the iron chloride of the iron chloride solution is FeCl₂ or FeCl₃.

9. Process for the preparation of iron oxide pigment according to Claim 7, **characterized in that** the drops have a mean diameter of 50 to 1000 µm.

10. Process for the preparation of iron oxide pigment according to Claim 7, **characterized in that** the dewatering takes place at a temperature of 300 to 900°C, in particular of 400 to 700°C.

11. Process for the preparation of iron oxide pigment according to Claim 7, **characterized in that** the calcination is carried out at temperatures of 200 to 800°C.

12. Process for the preparation of iron oxide pigment according to Claim 7, **characterized in that** the dechlorination takes place by means of a thermal treatment, by bringing steam into contact with the solid at temperatures of 200 to 400°C.

13. Process for the preparation of iron oxide pigments according to Claim 7, **characterized in that** a second thermal treatment is carried out at temperatures of 200 to 800°C.

14. Process for the preparation of iron oxide pigment according to Claim 7, **characterized in that** the total residence time of the drops/solids at temperatures of more than 300°C during the dewatering and calcination is between 1 s and 90 min, in particular between 5 min and 70 min.

15. Process for the preparation of iron oxide pigment according to Claim 7, **characterized in that** in addition, after the dewatering, either before or after the calcination, the solids are cooled and are then washed with water.

16. Process for the preparation of iron oxide pigment according to Claim 7, **characterized in that** all preparation steps are carried out in the same reactor or in different reactors.

17. Process for the preparation of iron oxide pigment according to any of Claims 7 to 15, **characterized in that**, after the calcination, the solids are subsequently milled, in particular using a jet mill, a pendulum roller mill or a mechanical classifier mill, until a mean size of 0.05 to 0.5, in particular of 0.1 to 0.3, µm is reached.

18. Use of iron oxide pigments according to any of Claims 1 to 6 in the construction sector, for paints and finishes, as raw material for the production of hard and soft ferrites, for the production of catalysts, for coloring paper and for use in colored substances in food and/or in the cosmetics sector.

19. Use of iron oxide pigments according to any of Claims 1 to 5 in the construction sector and/or for the production of catalysts.

20. Use of iron oxide pigments according to Claim 6 in the construction sector, for paints and finishes, as raw materials for the production of hard and soft ferrites, for the production of catalysts, for coloring paper and for use in colored substances in food and/or in the cosmetics sector.

## Revendications

1. Pigment d'oxyde de fer ayant des valeurs L*, a* et b* mesurées dans l'éclaircissement selon les unités CIELAB de
L* = 58 à 62, notamment 59 à 60,5,
a* = 22 à 27, notamment 23 à 26,
b*= 10 à 24, notamment 10 à 15, et
ayant une proportion d'oxyde de fer de plus de 99 % en poids, par rapport au pigment, et un diamètre de corps solide moyen de 10 à 500 µm.

2. Pigment d'oxyde de fer selon la revendication 1, **caractérisé en ce que** les corps solides ont une surface BET de 6,0 à 12,0 m²/g.

3. Pigment d'oxyde de fer selon la revendication 1, **caractérisé en ce que** les particules primaires des corps solides présentent une taille moyenne de 0,05 à 0,5, notamment de 0,1 à 0,3 µm.

4. Pigment d'oxyde de fer selon la revendication 1, **caractérisé en ce que** le pigment d'oxyde de fer a un pH DIN de 2,5 à 4,0, notamment de 2,8 à 3,5.

5. Pigment d'oxyde de fer selon l'une quelconque des revendications 1 à 4, **caractérisé en ce que** le pigment d'oxyde de fer a une teneur en chlorure de 0,1 % en poids ou moins par rapport au pigment.

6. Pigment d'oxyde de fer selon l'une quelconque des revendications 1 à 5, **caractérisé en ce que** le pigment d'oxyde de fer est constitué de particules primaires qui ont une taille moyenne de 0,05 à 0,5, notamment de 0,1 à 0,3 µm.

7. Procédé de fabrication d'un pigment d'oxyde de fer selon l'une quelconque des revendications 1 à 6, **caractérisé en ce que** des gouttes d'une solution de chlorure de fer sont déshydratées lors d'une première étape pour former des corps solides, qui sont ensuite calcinés lors d'une deuxième étape afin de réduire leur teneur en chlorure.

8. Procédé de fabrication d'un pigment d'oxyde de fer selon la revendication 7, **caractérisé en ce que** le chlorure de fer de la solution de chlorure de fer est FeCl₂ ou FeCl₃.

9. Procédé de fabrication d'un pigment d'oxyde de fer selon la revendication 7, **caractérisé en ce que** les gouttes ont un diamètre moyen de 50 à 1 000 µm.

10. Procédé de fabrication d'un pigment d'oxyde de fer selon la revendication 7, **caractérisé en ce que** la déshydratation a lieu à une température de 300 à 900 °C, notamment de 400 à 700 °C.

11. Procédé de fabrication d'un pigment d'oxyde de fer selon la revendication 7, **caractérisé en ce que** la calcination est réalisée à des températures de 200 à 800 °C.

12. Procédé de fabrication d'un pigment d'oxyde de fer selon la revendication 7, **caractérisé en ce que** la déchloration a lieu par un traitement thermique lors duquel de la vapeur d'eau est mise en contact avec les corps solides à des températures de 200 à 400 °C.

13. Procédé de fabrication de pigments d'oxyde de fer selon la revendication 7, **caractérisé en ce qu'**un deuxième traitement thermique est réalisé à des températures de 200 à 800 °C.

14. Procédé de fabrication d'un pigment d'oxyde de fer selon la revendication 7, **caractérisé en ce que** le temps de séjour total des gouttes/corps solides à des températures de plus de 300 °C pendant la déshydratation et la calcination est compris entre 1 s et 90 minutes, notamment entre 5 minutes et 70 minutes.

15. Procédé de fabrication d'un pigment d'oxyde de fer selon la revendication 7, **caractérisé en ce que** les corps solides sont en outre refroidis après la déshydratation, avant ou après la calcination, puis lavés avec de l'eau.

16. Procédé de fabrication d'un pigment d'oxyde de fer selon la revendication 7, **caractérisé en ce que** toutes les étapes de fabrication sont réalisées dans le même réacteur ou dans des réacteurs différents.

17. Procédé de fabrication d'un pigment d'oxyde de fer selon l'une quelconque des revendications 7 à 15, **caractérisé en ce que** les corps solides sont broyés après la calcination, notamment avec un broyeur à jet, un broyeur pendulaire ou avec un broyeur-trieur mécanique, jusqu'à atteindre une taille moyenne de 0,05 à 0,5, notamment de 0,1 à 0,3 µm.

18. Utilisation de pigments d'oxyde de fer selon l'une quelconque des revendications 1 à 6 dans le domaine de la construction, pour des peintures et des vernis, en tant que matière première pour la fabrication de ferrites durs et doux, pour la fabrication de catalyseurs, pour la coloration de papier et pour une utilisation pour des matières colorées dans le domaine des produits alimentaires et/ou de la cosmétique.

19. Utilisation de pigments d'oxyde de fer selon l'une quelconque des revendications 1 à 5 dans le domaine de la construction et/ou pour la fabrication de catalyseurs.

20. Utilisation de pigments d'oxyde de fer selon la revendication 6 dans le domaine de la construction, pour des peintures et des vernis, en tant que matière première pour la fabrication de ferrites durs et doux, pour la fabrication de catalyseurs, pour la coloration de papier et pour une utilisation pour des matières colorées dans le domaine des produits alimentaires et/ou de la cosmétique.
